# EUROPÄISCHE PATENTANMELDUNG

(11) **EP 3 067 152 A1**
(43) Veröffentlichungstag der Anmeldung: **14.09.2016**
(21) Anmeldenummer: 15158348.1
(22) Anmeldetag: 10.03.2015
(51) Int. Cl.: B23P 11/00, B25D 17/08

(54) **Mitnahmehülse in Werkzeugaufnahme**

(71) Anmelder: HILTI Aktiengesellschaft, 9494 Schaan (LI)
(72) Erfinder: Schallert, Manfred, 6710 Neuzing (AT); Mueller, Frank, 75181 Pforzheim (DE); Dr. Kußmaul, Rainer, 86926 Greifenberg (DE)
(74) Vertreter: Hilti Aktiengesellschaft Corporate Intellectual Property

(57) **Zusammenfassung**

Verfahren zur Herstellung einer Werkzeugaufnahmeeinrichtung (3), vorzugsweise für einen Bohr-, Meißel- oder Kombihammer, sowie zur Anordnung von Mitnahmestegen (9,10) an der Werkzeugaufnahmeeinrichtung (3) mit den Verfahrensschritten,
- Positionieren wenigstens einer Hülse (8) mit wenigstens einem Mitnahmesteg (9,10) an einer Außenumfangsfläche wenigstens eines Bestandteils (21) eines Umformwerkzeugs (20);
- Einführen des wenigstens einen Bestandteils (21) des Umformwerkzeugs (20) in eine zylindrische Durchbohrung (7) der Werkzeugaufnahmeeinrichtung (3), sodass eine Außenfläche (13) der Hülse (8) an einer Innenumfangsfläche (14) der Werkzeugaufnahmeeinrichtung (3) anliegt; und
- Ausüben einer Kraft auf die Außenumfangsfläche der Werkzeugaufnahmeeinrichtung (3) zum Umformen der Werkzeugaufnahmeeinrichtung (3) und insbesondere zum Umformen wenigstens eines Teilbereichs der Innenumfangsfläche (14) der Werkzeugaufnahmeeinrichtung, an dem die Außenfläche (13) der Hülse (8) anliegt, sodass eine kraft- und formschlüssige Verbindung zwischen der Innenumfangsfläche (14) der Werkzeugaufnahmeeinrichtung (3) und der Hülse (8) entsteht.

## Beschreibung

Die vorliegende Erfindung betrifft ein Verfahren zur Herstellung einer Werkzeugaufnahmeeinrichtung, vorzugsweise für einen Bohr-, Meißel- oder Kombihammer, sowie zur Anordnung von Mitnahmestegen an der Werkzeugaufnahmeeinrichtung.

Werkzeugmaschinen, wie z.B. Bohr-, Meißel- oder Kombihammer enthalten für gewöhnlich eine zylindrisch ausgestaltete Werkzeugaufnahmeeinrichtung, in die ein Ende eines Werkzeugs (beispielsweise ein Meißel) aufgenommen und gehalten wird. Um eine Drehmitnahme des Werkzeugs in der Werkzeugaufnahmeeinrichtung zu ermöglichen, ist an der Innenseite der Werkzeugaufnahmeeinrichtung eine Anzahl an sogenannten Mitnahmestegen vorgesehen. Die Mitnahmestege sind dabei üblicherweise als Erhebungen an der Innenoberfläche der Werkzeugaufnahmeeinrichtung ausgestaltet und greifen in entsprechend ausgeformte Vertiefungen an dem Werkzeug ein. Die Werkzeugaufnahmeeinrichtung ist normalerweise aus einem ersten Werkstoff gefertigt und die Mitnahmestege sind aus einem zweiten wesentlich härteren Werkstoff gefertigt. Die Mitnahmestege sind hierdurch verschleißresistenter.

Die Herstellung derartiger Werkzeugaufnahmeeinrichtung mit entsprechenden Mitnahmestegen ist jedoch aufwendig und kostenintensiv, da sowohl ein im Wesentlichen zylindrischer Grundkörper in die eigentliche Form der Werkzeugaufnahmeeinrichtung geformt als auch die Mitnahmestege an die entsprechenden Positionen an der Innenseite der Werkzeugaufnahmeeinrichtung gebracht werden müssen.

Es ist daher Aufgabe der vorliegenden Erfindung ein Verfahren zur Herstellung einer Werkzeugaufnahmeeinrichtung, vorzugsweise für einen Bohr-, Meißel- oder Kombihammer, sowie zur Anordnung von Mitnahmestegen an der Werkzeugaufnahmeeinrichtung bereitzustellen, mit dem das vorstehend genannte Problem gelöst und insbesondere eine Werkzeugaufnahmeeinrichtung mit entsprechenden Mitnahmestegen einfacher, effizienter und kostengünstiger gestaltet werden kann.

Diese Aufgabe wird erfindungsgemäss durch den Gegenstand des unabhängigen Anspruchs 1 gelöst. Vorteilhafte Ausgestaltungsformen der vorliegenden Erfindung finden sich in den abhängigen Unteransprüchen.

Hierzu wird ein ein Verfahren bereitgestellt zur Herstellung einer Werkzeugaufnahmeeinrichtung, vorzugsweise für einen Bohr-, Meißel- oder Kombihammer, sowie zur Anordnung von Mitnahmestegen an der Werkzeugaufnahmeeinrichtung.

Erfindungsgemäß sind dabei die folgenden Verfahrensschritte vorgesehen,
- Positionieren wenigstens einer Hülse mit wenigstens einem Mitnahmesteg an einer Außenumfangsfläche wenigstens eines Bestandteils eines Umformwerkzeugs;
- Einführen des wenigstens einen Bestandteils des Umformwerkzeugs in eine zylindrische Durchbohrung der Werkzeugaufnahmeeinrichtung, sodass eine Außenfläche der Hülse an einer Innenumfangsfläche der Werkzeugaufnahmeeinrichtung anliegt; und
- Ausüben einer Kraft auf die Außenumfangsfläche der Werkzeugaufnahmeeinrichtung zum Umformen der Werkzeugaufnahmeeinrichtung und insbesondere zum Umformen wenigstens eines Teilbereichs der Innenumfangsfläche der Werkzeugaufnahmeeinrichtung, an dem die Außenfläche der Hülse anliegt, sodass eine kraft- und formschlüssige Verbindung zwischen der Innenumfangsfläche der Werkzeugaufnahmeeinrichtung und der Hülse entsteht.

Gemäß einer vorteilhaften Ausführungsform der vorliegenden Erfindung kann dabei eine Wärmebehandlung wenigstens an der kraft- und formschlüssigen Verbindung zwischen der Innenumfangsfläche der Werkzeugaufnahmeeinrichtung und der Hülse vorgesehen sein. Hierdurch kann die mechanische Festigkeit der Mitnahmestege an der Innenumfangsfläche der Werkzeugaufnahmeeinrichtung weiter erhöht werden.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:
- Fig. 1: eine schematische Seitenansicht auf eine Werkzeugmaschine mit Werkzeugaufnahmeeinrichtung und Werkzeug;
- Fig. 2: eine perspektivische Ansicht der Werkzeugaufnahmeeinrichtung und des Werkzeugs in einem nicht verbundenen Zustand;
- Fig. 3: eine Vorderansicht der Werkzeugaufnahmeeinrichtung und des Werkzeugs;
- Fig. 4: eine Schnittansicht entlang einer Seitenansicht einer Werkzeugaufnahmeeinrichtung und eines Umformwerkzeugs samt Hülse mit Mitnahmestegen in einem nicht verbundenen Zustand;
- Fig. 5: eine erste seitliche Schnittansicht auf ein Umformwerkzeug mit einem zweiteiligen Dorn;
- Fig. 6: eine zweite seitliche Schnittansicht auf das Umformwerkzeug mit auf das Umformwerkzeug positionierten Hülse mit Mitnahmestegen;
- Fig. 7: eine Schnittansicht entlang einer Vorderseite der Werkzeugaufnahmeeinrichtung und des Umformwerkzeugs samt Hülse mit Mitnahmestegen in einem nicht verbundenen Zustand;
- Fig. 8: eine Schnittansicht entlang der Seitenansicht der Werkzeugaufnahmeeinrichtung und des Umformwerkzeugs samt Hülse mit Mitnahmestegen in einem verbundenen Zustand;
- Fig. 9: eine Schnittansicht entlang der Vorderseite der Werkzeugaufnahmeeinrichtung und des Umformwerkzeugs samt Hülse mit Mitnahmestegen in einem verbundenen Zustand; und
- Fig. 10: eine Schnittansicht eines Details der Werkzeugaufnahmeeinrichtung und der Hülse in einem verbundenen Zustand.

### Ausführungsbeispiel:

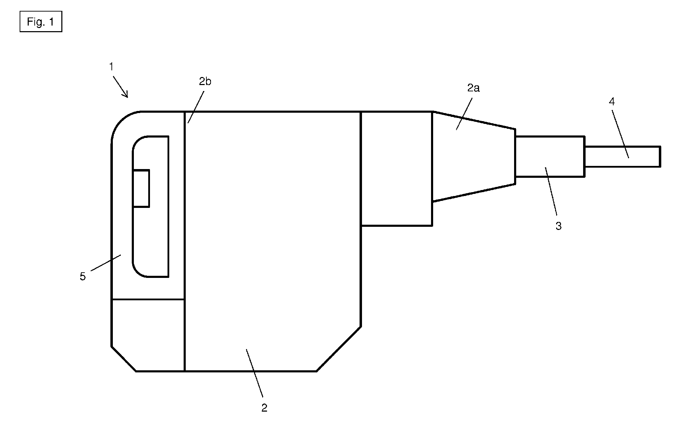

Fig. 1 zeigt eine Werkzeugmaschine 1 in Form eines Bohrhammers. Die Werkzeugmaschine 1 kann jedoch auch in jeder anderen geeigneten Form, wie z.B. als Meißel- oder Kombihammer, verwirklicht sein.

Die Werkzeugmaschine 1 enthält im Wesentlichen ein Gehäuse 2, eine Werkzeugaufnahmeeinrichtung 3 und ein Werkzeug 4. Die Werkzeugaufnahmeeinrichtung 3 dient dazu, ein in der Werkzeugmaschine 1 erzeugtes Drehmoment sowie vibrationsähnliche Schläge (d.h. Bewegung in axialer Richtung) auf das Werkzeug zu übertragen. Durch diese Übertragung kann mit Hilfe des Werkzeugs 4 ein entsprechend geeigneter Werkstoff (z.B. mineralisches Gestein) bearbeitet werden.

Bei dem Werkzeug 4 kann es sich beispielsweise um einen Meißel oder ähnliches handeln.

Das Gehäuse 2 weist ein vorderes Ende 2a und ein hinteres Ende 2b auf. An dem vorderen Ende 2a ist die Werkzeugaufnahme 3 zur Aufnahme eines Werkzeugs 4 positioniert. An dem hinteren Ende 2b ist wiederum ein Handgriff 5 zum Halten und Führen der Werkzeugmaschine 1 angeordnet.

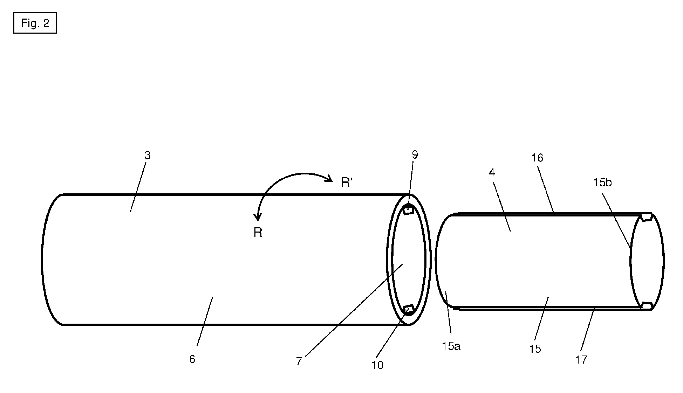

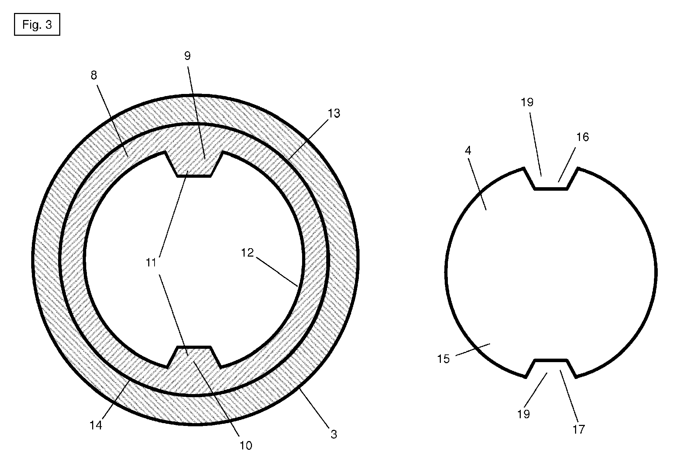

Wie insbesondere in Fig. 2 und 3 dargestellt, enthält die Werkzeugaufnahmeeinrichtung 3 im Wesentlichen einen zylindrischen Grundkörper 6 mit einer zylindrischen Durchbohrung 7. Die zylindrische Durchbohrung 7 enthält wiederum eine zylindrische Hülse 8 mit einem ersten Mitnahmesteg 9 und einem zweiten Mitnahmesteg 10.

Der erste Mitnahmesteg 9 und der zweite Mitnahmesteg 10 weisen jeweils eine Querschnittsfläche 11 in Form eines gleichschenkligen Trapezes auf und sind an der Innenumfangsfläche 12 der Hülse 8 gegenüberliegend positioniert. Es ist jedoch auch möglich, dass die Querschnittsfläche 11 des ersten und zweiten Mitnahmestegs 9, 10 jede andere geeignete Form aufweist. Die Hülse 8 ist mit der Außenumfangsfläche 13 an der Innenumfangsfläche 14 des Grundkörpers 6 der Werkzeugaufnahmeeinrichtung 3 angeordnet. Gemäß einer alternativen Ausgestaltungsform können an der Hülse 8 auch mehr oder weniger als zwei Mitnahmestege 9, 10 vorgesehen sein. Es ist dabei nicht notwendig, dass jeweils zwei Mitnahmestege 9, 10 gegenüberliegend an der Innenumfangsfläche 12 der Hülse 8 positioniert sind. Es ist zu beachten, dass das Material der Hülse 8 sowie der Mitnahmestege 9, 10 wesentlich härter ist als das Material des Grundkörpers 6 der Werkzeugaufnahmeeinrichtung 3.

Wie ebenfalls in Fig. 2 und 3 dargestellt, enthält das Werkzeug 4 im Wesentlichen eine zylindrische Grundform 15 mit einem ersten Ende 15a und einem zweiten Ende 15b. Mit dem ersten Ende 15a kann das Werkzeug 4 in die zylindrische Durchbohrung 7 der Werkzeugaufnahmeeinrichtung 3 eingeführt werden. In den Fig. 1 und 2 ist das Werkzeug 4 ohne entsprechende Schneide zur Bearbeitung eines Werkstoffs an dem zweiten Ende 15b dargestellt. Das als Meißel ausgestaltete Werkzeug 4 enthält eine erste Vertiefung 16 sowie eine zweite Vertiefung 17, wobei die beiden Vertiefungen 16, 17 gegenüberliegend an der Außenumfangsfläche 18 der zylindrischen Grundform 15 angeordnet sind. Die erste und zweite Vertiefung 16, 17 weisen jeweils eine Querschnittsfläche 19 in Form eines gleichschenkligen Trapezes auf. Es ist jedoch auch möglich, dass die Querschnittsfläche 19 der ersten und zweiten Vertiefung 16, 17 jede andere geeignete Form aufweist. Die Querschnittsfläche 19 der ersten und zweiten Vertiefung 16, 17 muss jedoch dabei der Querschnittsfläche 11 des ersten und zweiten Mitnahmestegs 9, 10 entsprechen.

Damit das in der Werkzeugmaschine 1 erzeugte Drehmoment sowie die vibrationsähnlichen Schläge auf das Werkzeug 4 übertragen werden können, wird das als Meißel ausgestaltete Werkzeug 4 mit dem ersten Ende 15a der Grundform 15 in die zylindrische Durchbohrung 7 der Werkzeugaufnahmeeinrichtung 3 eingeführt. Aufgrund der formschlüssigen Verbindung der Mitnahmestege 9, 10 des Werkzeugs 4 mit den entsprechenden Vertiefungen 16, 17 der Werkzeugaufnahmeeinrichtung 3 können sich das Werkzeug 4 sowie die Werkzeugaufnahmeeinrichtung 3 nicht relativ zueinander in Richtung R oder R' verdrehen. Hierdurch kann ein Drehmoment von der Werkzeugaufnahmeeinrichtung 3 auf das Werkzeug 4 übertragen werden.

Nachfolgend wird das erfindungsgemäße Verfahren zur Herstellung einer Werkzeugaufnahmeeinrichtung 3, vorzugsweise für einen Bohr-, Meißel- oder Kombihammer, sowie zur Anordnung der Hülse 8 mit den Mitnahmestegen 9, 10 an der Werkzeugaufnahmeeinrichtung 3 beschrieben.

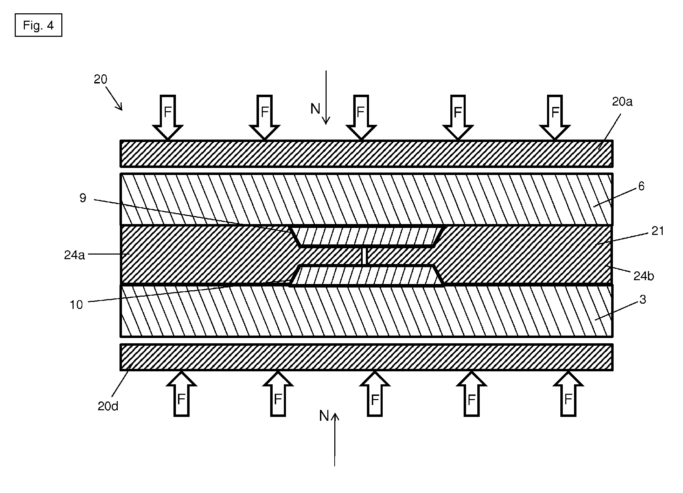

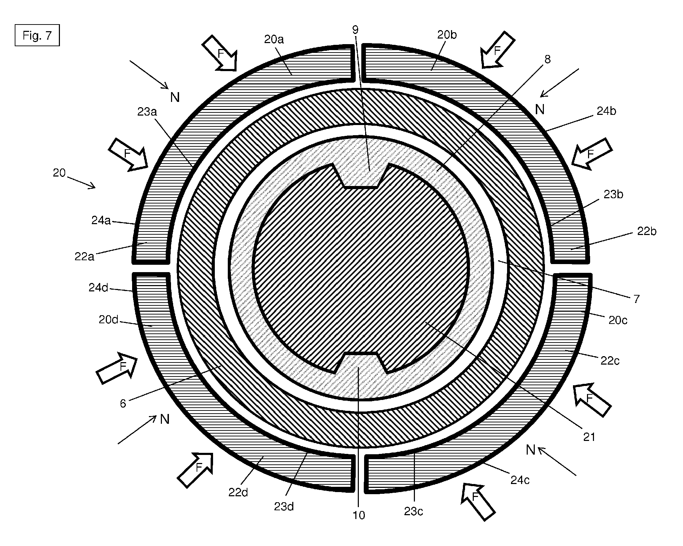

Wie in Fig. 4 und 7 dargestellt, wird die Hülse 8 mit den beiden Mitnahmestegen 9, 10 mit Hilfe eines Umformwerkzeugs 20 an die Innenumfangsfläche 14 des Grundkörpers 6 der Werkzeugaufnahmeeinrichtung 3 befestigt. Es ist zu beachten, dass in den Figuren nicht das vollständige Umformwerkzeug 20 dargestellt ist und lediglich einige der wichtigsten Bauteile schematisch dargestellt werden.

Das Umformwerkzeug 20 enthält dabei eine erste, zweite, dritte und vierte Umformschale 20a, 20b, 20c, 20d (vgl. Fig. 7). Die vier Umformschalen 20a, 20b, 20c, 20d sind dabei um einen zentralen Dorn 21 positioniert. Jeder der vier Umformschalen 20a, 20b, 20c, 20d weist eine gebogene Grundform 22a, 22b, 22c, 22d auf mit einer konkaven Oberfläche 23a, 23b, 23c, 23d und einer konvexen Oberfläche 24a, 24b, 24c, 24d. Die vier Umformschalen 20a, 20b, 20c, 20d sind so um den zentralen Dorn 21 angeordnet, dass die konkave Oberfläche 23a, 23b, 23c, 23d einer jeden Umformschale 20a, 20b, 20c, 20d zu dem Dorn gerichtet 21 ist.

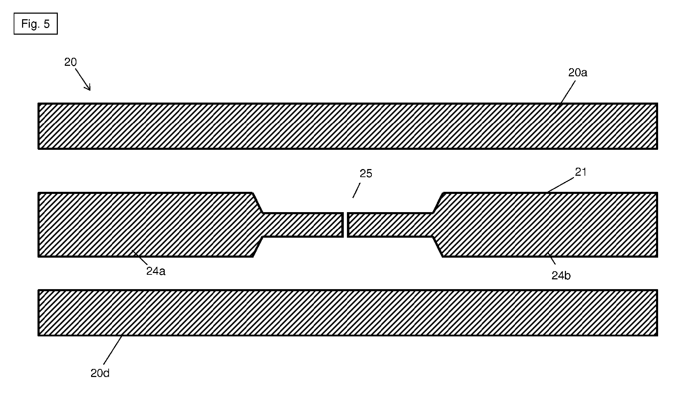

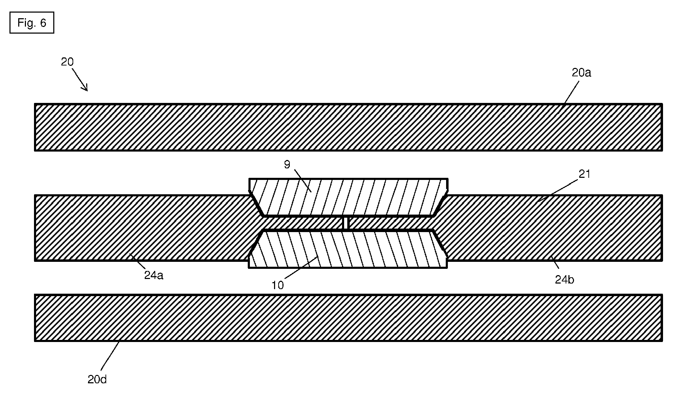

Der zentrale Dorn 21 enthält im Wesentlichen einen zylindrischen zweiteiligen Grundkörper 24, der einen ersten Grundkörperteil 24a und einen zweiten Grundkörperteil 24b enthält. Der Grundkörper 24 enthält darüber hinaus eine um den Grundkörper 24 umlaufende Ausnehmung 25 (vgl. Fig. 5). Die Ausnehmung 25 entspricht im Wesentlichen der Form Hülse 8 und dient dazu, die Hülse 8 mit den Mitnahmestegen 9, 10 in sich aufzunehmen. Die Form der Ausnehmung 25 ist dabei jedoch so gewählt, dass die Hülse 8 zu einem gewissen Anteil aus der Ausnehmung 25 herausragt (vgl. Fig. 6 und 7).

Das Umformwerkzeug 20 hat im Wesentlichen eine erste Stellung und eine zweite Stellung und kann reversible zwischen der ersten und der zweiten Stellung bewegt werden.

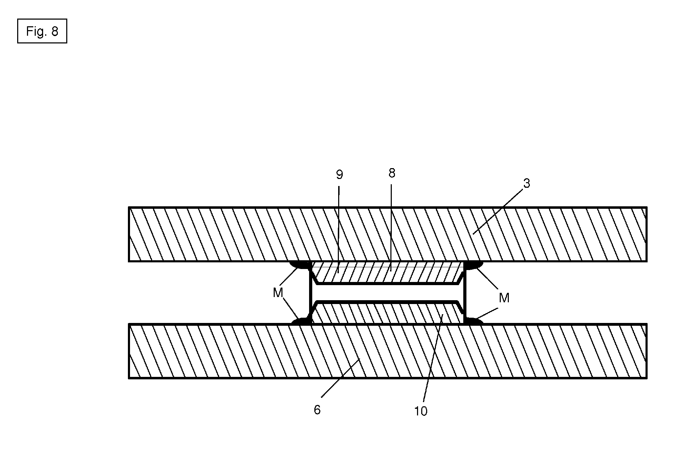

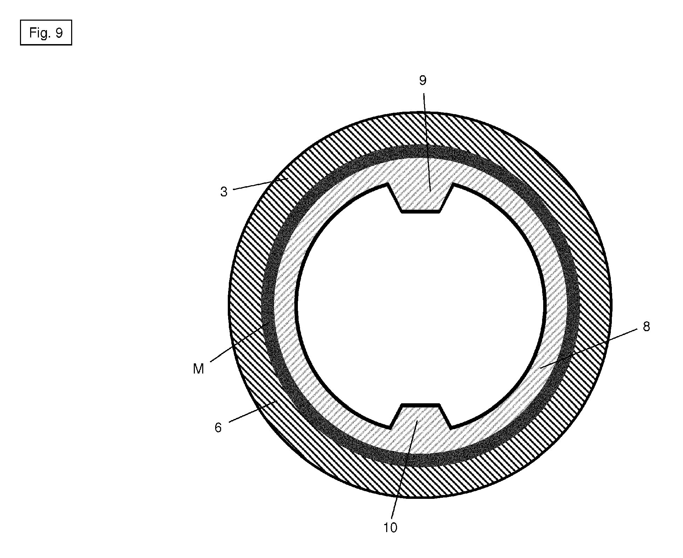

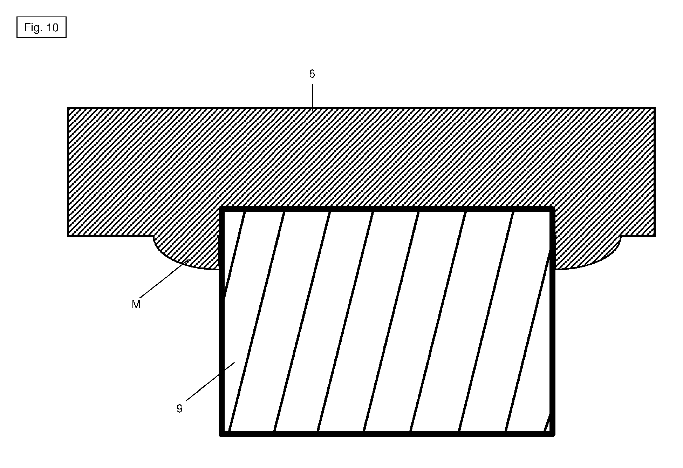

In der ersten Stellung ist das Umformwerkzeug 20 geöffnet, d.h. die vier Umformschalen 20a, 20b, 20c, 20d sind von dem Dorn 21 wegbewegt, sodass ein gewisser Abstand zwischen den einzelnen Umformschalen 20a, 20b, 20c, 20d und dem Dorn 21 entsteht (vgl. Fig. 4 und 7). In den Abstand zwischen den einzelnen Umformschalen 20a, 20b, 20c, 20d und dem Dorn 21 kann der zylindrische Grundkörper 6 der Werkzeugaufnahmeeinrichtung 3 positioniert werden. In der zweiten Stellung ist das Umformwerkzeug 20 geschlossen, d.h. jede Umformschale 20a, 20b, 20c, 20d ist auf den Dorn 21 in entsprechender Richtung N zubewegt, sodass die Werkzeugaufnahmeeinrichtung 3 fest zwischen dem Dorn 21 und den einzelnen Umformschalen 20a, 20b, 20c, 20d gehalten ist. Druck F wird von Außen auf die einzelnen Umformschalen 20a, 20b, 20c, 20d ausgeübt, damit sich das Material des Grundkörpers 6 der Werkzeugaufnahmeeinrichtung 3 an die Form des Dorns 21 und der Umformschalen 20a, 20b, 20c, 20d anpasst. Dadurch, dass sowohl das Material der Hülse 8 mit den Mitnahmestegen9, 10 als auch das Material des Dorns 21 und der Umformschalen 20a, 20b, 20c, 20d wesentlich härter ist als das Material des Grundkörpers 6 der Werkzeugaufnahmeeinrichtung 3 wird die Hülse 8, die aus den Ausnehmungen 25 des Dorns 21 herausragt, in die Innenumfangsfläche 14 des Grundkörpers 6 der Werkzeugaufnahmeeinrichtung 3 gedruckt bzw. geknetet. Die Hülse 8 dringt in den Grundkörper 6 ein, sodass Material von dem Grundkörper 6 über die Ecken der Hülse 8 gedrückt bzw. geknetet wird. Es entsteht ein Materialüberwurf M über die Enden der Hülse 8, wodurch die Hülse 8 mit den Mitnahmestegen 9, 10 fest mit der Innenumfangsfläche 14 des Grundkörpers 6 verbunden wird (vgl. Fig. 8, 9, 10). Nachdem die Hülse 8 an die Innenumfangsfläche 14 des Grundkörpers 6 geknetet sind, bewegt sich das Umformwerkzeug 20 von der zweiten Stellung in die erste Stellung, sodass sich die Umformschalen 20a, 20b, 20c, 20d von dem Dorn 21 wegbewegen und die Werkzeugaufnahmeeinrichtung 3 wieder freiliegt. Die Hülse 8 mit den Mitnahmestegen 9, 10 verbleibt dabei an der Innenumfangsfläche 14 des Grundkörpers 6. Durch den zweiteilig ausgestalteten Dorn 21 kann dieser von beiden Enden aus der Hülse 8 entnommen werden.

Zusätzlich zu den vorstehend beschriebenen Verfahrensschritten, kann nach Beendigung des Druckausübens von dem Umformwerkzeug 20 auf die Werkzeugaufnahmeeinrichtung 3 noch eine Wärmebehandlung folgen. Hierbei wird gezielt Hitze auf die Stellen der Innenumfangsfläche 14 des Grundkörpers 6 gerichtet, an denen die Hülse 8 mit dem Grundkörper 6 verbunden ist. Durch die Wärmebehandlung kann die mechanische Festigkeit der Hülse 8 mit den Mitnahmestegen 9, 10 an der Innenumfangsfläche 14 des Grundkörpers 6 der Werkzeugaufnahmeeinrichtung 3 weiter erhöht werden.

## Patentansprüche

1. Verfahren zur Herstellung einer Werkzeugaufnahmeeinrichtung (3), vorzugsweise für einen Bohr-, Meißel- oder Kombihammer, sowie zur Anordnung von Mitnahmestegen (9, 10) an der Werkzeugaufnahmeeinrichtung (3),
**gekennzeichnet durch** die Verfahrensschritte
- Positionieren wenigstens einer Hülse (8) mit wenigstens einem Mitnahmesteg (9, 10) an einer Außenumfangsfläche wenigstens eines Bestandteils (21) eines Umformwerkzeugs (20);
- Einführen des wenigstens einen Bestandteils (21) des Umformwerkzeugs (20) in eine zylindrische Durchbohrung (7) der Werkzeugaufnahmeeinrichtung (3), sodass eine Außenumfangsfläche (13) der Hülse (8) an einer Innenumfangsfläche (14) der Werkzeugaufnahmeeinrichtung (3) anliegt; und
- Ausüben einer Kraft auf die Außenumfangsfläche der Werkzeugaufnahmeeinrichtung (3) zum Umformen der Werkzeugaufnahmeeinrichtung (3) und insbesondere zum Umformen wenigstens eines Teilbereichs der Innenumfangsfläche (14) der Werkzeugaufnahmeeinrichtung (3), an dem die Außenumfangsfläche (13) der Hülse (8) anliegt, sodass eine kraft- und formschlüssige Verbindung zwischen der Innenumfangsfläche (14) der Werkzeugaufnahmeeinrichtung (3) und der Hülse (8) entsteht.

2. Verfahren nach Anspruch 1,
**gekennzeichnet durch** eine Wärmebehandlung wenigstens an der kraft- und formschlüssigen Verbindung zwischen der Innenumfangsfläche (14) der Werkzeugaufnahmeeinrichtung (3) und der Hülse (8).
